# EUROPÄISCHE PATENTSCHRIFT

(11) **EP 1 314 499 B1**
(45) Veröffentlichungstag und Bekanntmachung des Hinweises auf die Patenterteilung: **27.12.2006**
(21) Anmeldenummer: 02018872.8
(22) Anmeldetag: 24.08.2002
(51) Int. Cl.: B23B 31/12

(54) **Spannfutter zum schlüssellosen Einspannen von Werkzeugen**
Keyless chuck
Mandrin de serrage sans clé

(30) Priorität: 21.11.2001 DE 10157055
(43) Veröffentlichungstag der Anmeldung: 28.05.2003
(73) Patentinhaber: Metabowerke GmbH, 72602 Nürtingen (DE)
(72) Erfinder: Höschele, Volker, 72636 Frickenhausen (DE)
(74) Vertreter: Dreiss, Fuhlendorf, Steimle & Becker

(56) Entgegenhaltungen:
- WO-A-98/14294
- DE-C- 4 416 224
- US-A- 5 458 345

## Beschreibung

Die Erfindung betrifft ein Spannfutter zum schlüssellosen Einspannen von Werkzeugen in Elektrohandwerkzeuge, insbesondere Bohrer, Meißel, Schrauber, Bohrhämmer mit einem Futterkörper, einer Betätigungshülse, die den Futterkörper zumindest abschnittsweise koaxial umschließt und die relativ zum Futterkörper verdrehbar ist sowie Spannbacken, die in Schrägführungen geführt sind und durch eine Drehung der Betätigungshülse in axialer und gleichzeitig radialer Richtung relativ zum Futterkörper bewegbar sind und einer Sperreinrichtung, die ein ungewolltes Öffnen des Spannfutters verhindert, bei dem die Sperreinrichtung einen Zwischenring umfasst, der zum Öffnen und Schließen der Spannbacken mit diesen zusammenwirkt und der relativ zum Futterkörper verdrehbar ist, wobei die Relativbewegung in der Spannlage, bei der die Spannbacken gegen einander oder ein eingespanntes Werkzeug anliegen, in Öffnungsrichtung der Spannbacken verhindert und eine Relativbewegung in Schließrichtung möglich ist und eine Klinke, die auf dem Zwischenring drehbar gelagert ist und in der Spannlage in korrespondierende Rasten, die drehfest zum Futterkörper sind, eingreift, wobei die Betätigungshülse relativ zum Zwischenring verdrehbar ist und die Verdrehbewegung durch ein Kopplungsglied, das mit der Betätigungshülse verbunden ist, begrenzt ist und das in zwei Endlagen die Betätigungshülse und den Zwischenring miteinander koppelt und im gekoppelten Zustand die Drehung der Betätigungshülse auf den Zwischenring überträgt.

Durch eine derartige Sperreinrichtung soll ein selbsttätiges Öffnen des Futters insbesondere auch im Schlagbohrbetrieb verhindert werden, bei dem die Maschine erheblichen Stößen ausgesetzt ist.

Derartige Spannfutter sind bekannt. So zeigt die EP 0 791 422 A1 ein Bohrfutter mit einer Betätigungshülse, die im vorderen Bereich des Bohrfutters angeordnet ist, die zum Zwecke des Spannens oder Lösens des Bohrfutters relativ zum Futterkörper gedreht werden kann, wobei das Bohrfutter eine zweite Hülse aufweist, die drehfest mit dem Futterkörper verbunden ist, jedoch axial auf diesem verschoben werden kann. Die Axialverschiebung dient hier zum Aktivieren einer Sperr- oder Rasteinrichtung, die das Bohrfutter schlagbohrfest verriegelt.

Darüber hinaus ist es beispielsweise aus der DE 41 06 129 bekannt, durch Drehen der hinteren Hülse eine Sperreinrichtung in Eingriff bzw. außer Funktion zu bringen.

Nachteilig bei den vorgenannten Bohrfuttern ist, dass für die Bedienung zwei Hände benötigt werden oder ein Umgreifen der Hand zur Verriegelung des Bohrfutters nötig wird. Die Maschine selbst kann dann nur schwierig sicher und fest gegriffen werden. Zumeist wird sie dann zwischen die Knie geklemmt.

Darüber hinaus gibt es sogenannte einhülsige Schnellspann-Bohrfutter, wie sie z. B. in der EP 0 335 593 B1 beschrieben sind, die nur eine Betätigungshülse besitzen, die in Schließrichtung gedreht zunächst die Backen aufeinanderzu bewegt und dann, wenn die Backen am Bohrerschaft anliegen, bei Weiterdrehen überrasten und bei noch weiterem Drehen des Bohrfutters fester schließen. In Öffnungsrichtung wird zunächst durch Überrasten die Sperreinrichtung gelöst und dann beim Weiterdrehen das Bohrfutter geöffnet. Auf diese Weise ist eine Betätigung des Bohrfutters in allen Funktionen mit nur einer Hand möglich, während die andere Hand des Benutzers die Bohrmaschine sicher halten kann.

Eine analoge Ausführungsform eines einhülsigen Schnellspannbohrfutters zeigt auch die DE 295 22 204 U1, bei der die Rasteinrichtung durch Rasthaken am Futterkörper und Bleche gebildet ist, die zwischen die Betätigungshülse und eine Stellmutter eingelegt sind. Diese Lösung hat den Nachteil, dass die Haltekraft der Rasteinrichtung bei besonders rauhen Einsatzbedingungen oft nicht ausreicht. Außerdem sind die Schaltnocken einem starken Verschleiß ausgesetzt.

Schließlich ist im Stand der Technik noch die DE 44 16 224 C1 bekannt, die eine gattungsgemäße Rasteinrichtung mit einem federunterstützten Rastnocken zeigt. Diese Rasteinrichtung beinhaltet jedoch eine relativ aufwendige Einrichtung zum Halten des Rastnockens in seiner eingerasteten Stellung.

Es ist daher Aufgabe der Erfindung, ein Spannfutter zum schlüssellosen Einspannen von Werkzeugen in Elektrohandwerkzeugen bereitzustellen, bei dem die Bedienung mit einer Hand erfolgen kann, wobei die andere Hand das Elektrohandwerkzeug sicher hält und bei der gleichzeitig auf konstruktiv einfache Weise ein ungewolltes Öffnen des Bohrfutters auch beispielsweise im Schlagbohrbetrieb sicher verhindert werden kann.

Die Erfindung löst diese Aufgabe durch ein Spannfutter der gattungsgemäßen Art, wobei das Kopplungsglied in der ersten Endlage in einer Rasttasche der Klinke federnd gehalten ist und der Zwischenring mit einem Gewindering drehfest verbunden ist und der Gewindering mit den Spannbacken zusammenwirkt zum Öffnen und Schließen derselben.

Auf diese Weise kann eine Sperreinrichtung für ein Spannfutter bereitgestellt werden, das insbesondere eine höhere Haltekraft gewährleistet und insbesondere bei dem die Sperreinrichtung automatisch aktiviert und deaktiviert werden kann. Die Aktivierung und Deaktivierung der Sperreinrichtung erfolgt beim erfindungsgemäßen Spannfutter durch die Verdrehbewegung der Betätigungshülse, die zugleich der Öffen- und Schließbewegung der Betätigungshülse entspricht. Die Sperreinrichtung umfasst dabei einen Zwischenring, insbesondere einen Blechring, der mit den Spannbacken beim Öffnen und Schließen derselben zusammenwirkt und der relativ zum Futterkörper verdrehbar ist. Die Relativbewegung erfolgt allerdings nur so lange, bis die Spannlage erreicht ist, d. h. die Lage, bei der die Spannbacken gegeneinander oder gegen ein eingespanntes Werkzeug anliegen. In dieser Spannlage greift dann eine Klinke, die auf dem Zwischenring drehbar gelagert ist, in korrespondierende Rasten, die drehfest am Futterkörper angeordnet sind, ein. In dieser Lage wird die Relativbewegung in Öffnungsrichtung verhindert. In dieser Spannlage, in der die Klinke in die Rasten eingreift, ist nur noch eine weitere Schließbewegung möglich, d. h. eine weitere Drehung des Zwischenrings in Schließrichtung der Spannbacken.

Auf diese Weise wird sichergestellt, dass sobald die Spannbacken gegen ein Werkzeug anliegen und die Spannlage erreicht wird, die Klinke, die in die Rasten eingreift, ein Öffnen des Bohrfutters verhindert.

Es kann insbesondere vorgesehen sein, dass die Klinke federbelastet ist und die Feder die Klinke in der Spannlage in die Rasten hineindrückt.

Die Feder kann hierbei ebenfalls mit dem Zwischenring drehfest verbunden sein.

In einer ersten Endlage der Relativbewegung zwischen Zwischenring und Betätigungshülse, bei geöffnetem Spannfutter, also bevor die Spannlage erreicht wird und die Spannbacken gegen einen Werkzeugschaft anliegen, soll vorgesehen sein, dass das Kopplungsglied mit der Klinke zusammenwirkt und die Klinke gegen die Federkraft der Feder von den Rasten abhebt. Es ist hierzu vorgesehen, dass das Kopplungsglied in dieser ersten Endlage in einer Rasttasche oder Rastaufnahme der Klinke federnd gehalten ist, wobei z. B. ein Formschluss gegeben sein kann, der nach Überwindung der Federkraft aufgehoben ist.

Darüber hinaus ist der Zwischenring mit einem Gewindering drehfest verbunden und der Gewindering wirkt mit den Spannbacken zusammen zum Öffnen und Schließen derselben.

Es kann des weiteren vorgesehen sein, dass in der Spannlage, in der die Spannbacken gegen einen Werkzeugschaft anliegen, das Kopplungsglied die Klinke freigibt und die Betätigungshülse relativ zum Zwischenring bis zum Erreichen einer zweiten Endlage verdrehbar ist. Nach Erreichen der zweiten Endlage wird die Betätigungshülse wieder zusammen mit dem Zwischenring gedreht, zum Nachspannen des Spannfutters in der Spannlage. D. h. in dieser zweiten Endlage, in der die Klinke bereits in die Rasten eingreift, ist eine weitere Drehbewegung nur noch in Schließrichtung des Spannfutters möglich, wobei die Klinke und die Rasten so ausgebildet sind, dass die Klinke in Schließrichtung die Rasten überwinden kann und in jeder Raste erneut einrastet. Auf diese Weise kann die Haltekraft des Spannfutters weiter erhöht werden, wobei eine Öffnungsbewegung zu jedem Zeitpunkt sicher verhindert bzw. blockiert ist.

Hierbei erfolgt die Kraftübertragung von der Betätigungshülse auf die Sperreinrichtung jedoch über den Zwischenring und nicht über die Klinke, so dass der Verschleiß an der Klinke verringert ist.

In dieser zweiten Endlage ist das Kopplungsglied wie auch in der ersten Endlage federnd in einer Rastausnehmung des Zwischenrings gehalten, wie es zuvor in der ersten Endlage federnd in einer Ausnehmung der Klinke gehalten war. Es sind dann keine zusätzlichen Halteelemente notwendig.

Es kann hierbei vorgesehen sein, dass die Rasten nicht nur drehfest zum Futterkörper angeordnet sind, sondern unmittelbar in diesem ausgebildet sind. Auf diese Weise wird eine besonders einfache Konstruktion ermöglicht.

Als Kopplungsglied kann ein Stift vorgesehen sein, der insbesondere aus Metall gebildet ist, dessen Längserstreckung in axialer Richtung des Spannfutters verläuft und beispielsweise in die aus Kunststoff bestehende Betätigungshülse eingespritzt oder eingesteckt sein kann. Auf diese Weise wird eine besonders einfache konstruktive Gestaltung gewährleistet.

Es kann weiterhin vorgesehen sein, dass in der ersten Endlage das Kopplungsglied neben der Klinke auch mit dem Zwischenring zusammenwirkt, zur Übertragung des Drehmoments zum Öffnen und Schließen der Spannbacken von der Betätigungshülse auf den Zwischenring. Auf diese Weise wird sichergestellt, dass das Drehmoment zum Lösen der Spannbacken nicht über die Klinke sondern über den Blechring (Zwischenring) übertragen wird. Auf diese Weise kann ein Verschleiß weiter verringert werden.

Das Lösen des Spannfutters erfolgt nun entgegengesetzt zum vorstehend beschriebenen Schließen desselben. Zum Lösen des Spannfutters wird zunächst der Stift gegen die federnde Kraft der Rastausnehmung der zweiten Endlage aus der Rastausnehmung des Zwischenrings herausbewegt, wobei die Betätigungshülse und der Zwischenring zueinander eine Relativbewegung durchführen, bis sich der Stift bzw. das Kopplungsglied wieder in der ersten Endlage befindet, die der Spannlage entspricht. Das Kopplungsglied kann dann zum einen mit der Klinke zusammenwirken, um diese gegen die Kraft der Feder aus den Rasten abzuheben und zum anderen mit dem Zwischenring nach einer bevorzugten Ausführungsform zusammenwirken, um das Öffnungsmoment nicht über die Klinke auf den Zwischenring zu übertragen, sondern für eine unmittelbare Übertragung auf den Zwischenring zu sorgen.

Es kann weiterhin vorgesehen sein, dass das Spannfutter neben der zuvor beschriebenen einhülsigen Ausführung zweihülsig ausgebildet sein kann und neben der Betätigungshülse eine hintere Hülse vorgesehen ist, die am maschinenseitigen Ende des Spannfutters angeordnet ist und die den Futterkörper koaxial umschließt, wobei die Betätigungshülse am werkzeugseitigen Ende des Spannfutters vorgesehen ist. Bei einer einhülsigen Ausführung ist die Betätigungshülse so weit nach hinten (maschinenseitiges Ende) herausgezogen, dass sie den Futterkörper ganz umschließt und überdeckt.

Es handelt sich hierbei beim maschinenseitigen Ende des Spannfutters um die Seite des Spannfutters, die mit einer Antriebswelle eines Elektrohandwerkzeugs verbunden ist. Hingegen handelt es sich beim werkzeugseitigen Ende des Spannfutters um die Seite des Spannfutters, an der die Spannbacken angeordnet sind und an der ein Werkzeug in das Spannfutter eingeführt werden kann.

Es kann weiterhin vorgesehen sein, dass die Betätigungshülse die hintere Hülse zumindest abschnittsweise überlappt oder umgekehrt. Schließlich kann vorgesehen sein, dass sich die Sperreinrichtung am maschinenseitigen Ende des Spannfutters befindet.

Weitere Vorteile und Merkmale der Erfindung ergeben sich aus den übrigen Anmeldungsunterlagen. Die Merkmale können einzeln oder in beliebiger Kombination miteinander für die Erfindung wesentlich sein.

Die Erfindung soll im Folgenden anhand von einer Zeichnung näher erläutert werden.

Dabei zeigen:
- Figur 1: ein erfindungsgemäßes Spannfutter in einer perspektivischen Darstellung;
- Figur 2: einen Schnitt durch das Spannfutter in Längsrichtung im geschlossenen Zustand;
- Figur 3: einen Querschnitt durch das Spannfutter im geöffneten Zustand und
- Figur 4: einen Querschnitt durch das Spannfutter im geschlossenen Zustand.

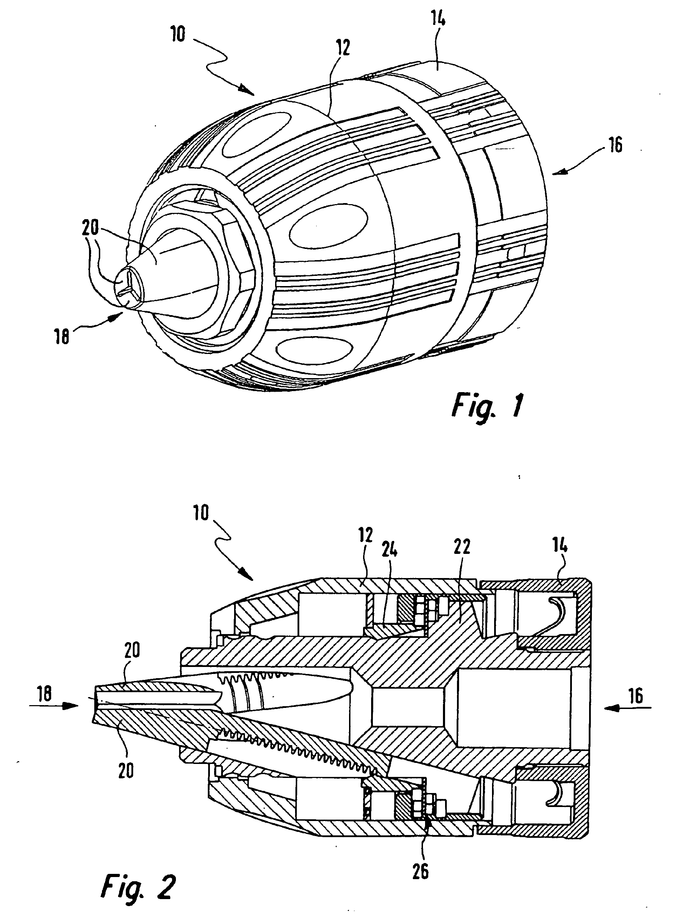

Figur 1 zeigt ein Bohrfutter, das in seiner Gesamtheit mit dem Bezugszeichen 10 versehen ist in zweihülsiger Bauart bestehend aus einer Betätigungshülse 12, und einer hinteren Hülse 14, wobei die hintere Hülse 14 drehfest mit einem Futterkörper verbunden und am maschinenseitigen Ende 16 des Bohrfutters 10 angeordnet ist. Die Betätigungshülse 12 befindet sich am werkzeugseitigen Ende 18 des Bohrfutters 10. Die Betätigungshülse 12 und die hintere Hülse 14 umschließen dabei den nicht dargestellten Futterkörper koaxial. Die Betätigungshülse 12 wird in ihrem maschinenseitigen Bereich durch die hintere Hülse abschnittsweise überlappt.

Am werkzeugseitigen Ende des Bohrfutters 10 sind drei Spannbacken 20 im 120° Winkel zueinander vorgesehen, die sich im Bohrfutter öffnen und schließen lassen und dabei eine axiale-radiale Bewegung durchführen.

Figur 2 zeigt nun einen Schnitt durch das in Figur 1 dargestellte Bohrfutter in Längsrichtung.

Bei der dargestellten zweihülsigen Bauart umfasst das Bohrfutter 10 einen Futterkörper 22, die Spannbacken 20, einen Gewindering 24 sowie die beiden Hülsen 12, 14.

Darüber hinaus weist das Bohrfutter 10 eine Sperreinrichtung 26 auf, die in den folgenden Figuren näher erläutert ist.

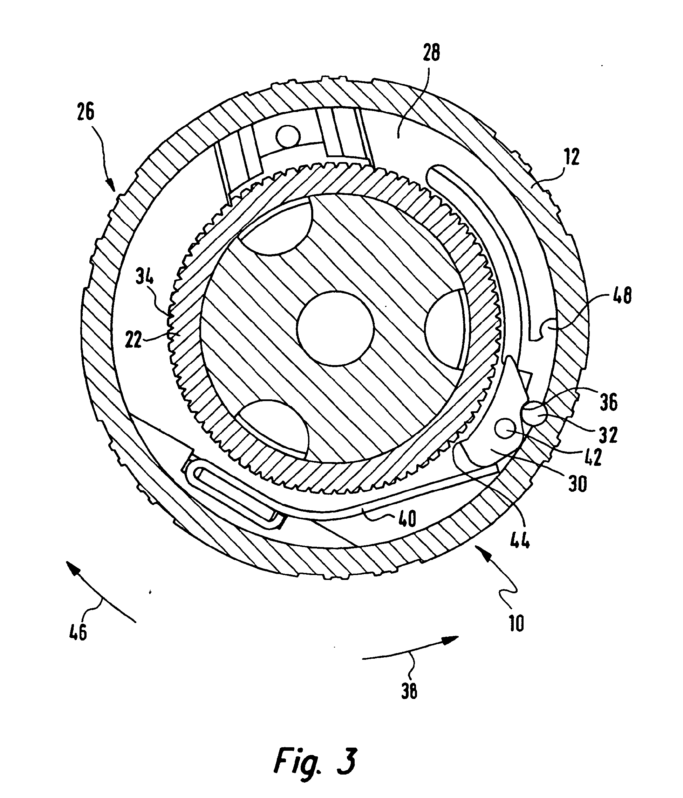

Figur 3 zeigt nun das Bohrfutter 10 in einer geöffneten Stellung im Bereich der Sperreinrichtung 26. Die Sperreinrichtung 26 umfasst dabei einen Zwischenring 28, eine Klinke 30, ein Kopplungsglied 32, das hier als Metallstift ausgebildet ist, sowie am Futterkörper 22 angebrachte Rasten 34, die am Außenumfang eines Bereiches des Futterkörpers 22 angeordnet sind.

Beim Schließen des Bohrfutters 10 befindet sich die Sperreinrichtung 26 bei geöffneten Spannbacken 20 zunächst in dem in Figur 3 gezeigten Zustand.

D. h. das Kopplungsglied 32, das aus einem Metallstift besteht und in die Betätigungshülse 12 eingespritzt ist, drückt gegen die Rückseite der Klinke 30 und liegt dort in einer Rastausnehmung 36, in der es federnd gehalten ist. Die Klinke 30 wird dadurch von den Rasten 34 abgehoben.

Zum Schließen des Bohrfutters, d. h. zum Spannen eines Werkzeuges, wird nun die Betätigungshülse 12 in Pfeilrichtung 38, die der Schließrichtung entspricht, im Gegenuhrzeigersinn gedreht. Die Federkraft der Rastausnehmung 36 reicht dabei aus, die Betätigungshülse 12 über das Kopplungsglied 32 mit der Klinke 30 zu koppeln solange bis die Spannbacken 20 gegen ein nicht dargestelltes Werkzeug anliegen.

Durch die Drehung der Betätigungshülse 12 in Schließrichtung 38 wird zunächst die Klinke 30 und damit der mit dieser fest verbundene Zwischenring 28 und hiermit wiederum der mit dem Zwischenring 28 verbundene Gewindering 24 mitgedreht. Die Drehung des Gewinderings 24 bewirkt ein Vorschieben und damit ein Schließen der Spannbacken 20, die in den Schrägführungen, in denen sie geführt sind, eine axiale und gleichzeitig radiale Schließbewegung durchführen.

Sobald die Spannbacken an einem Werkzeugschaft (nicht dargestellt) anliegen, gleitet das Kopplungsglied 32 bei weiterer Drehung der Betätigungshülse 12 gegen die Federkraft der Rastausnehmung 36 aus der in der Klinke 30 eingearbeiteten Rastausnehmung 36 heraus und die Klinke 30 wird durch die Kraft einer Feder 40, die ebenfalls am Zwischenring 28 angebracht ist, um das Gelenk 42 verschwenkt, so dass eine Nase 44 der Klinke 30 in die Rasten 34 des Futterkörpers 22 eingreift. Damit wird ein selbsttätiges Drehen des Zwischenrings 28 und damit auch des Gewinderings 24 in Öffnungsrichtung (Pfeil 46), die dem Uhrzeigersinn entspricht, verhindert. Es wird hierdurch eine Schlagbohrfestigkeit des Bohrfutters 10 erreicht.

Bei weiterer Drehung an der Betätigungshülse 12 bewegt sich diese zunächst relativ zum Zwischenring 28 und zwar so lange, bis die zweite Endlage erreicht ist, in der das Kopplungsglied 32 die Betätigungshülse 12 wieder mit dem Zwischenring 28 koppelt. Die erste Endlage ist zuvor beschrieben worden, wobei hier der Stift 32 in der Rastausnehmung bzw. Rasttasche 36 ruht.

Die zweite Endlage ist erreicht, wenn sich das Kopplungsglied 32 zu der Rastausnehmung 48 bewegt und in diese Rastausnehmung einrastet. Über die Betätigungshülse 12 wird dann durch Kopplung mit dem Zwischenring 28 wieder der Gewindering 24 in Schließrichtung 38 mitgenommen bei weiterer Drehung der Betätigungshülse 12 und damit die Spannbacken 20 weiter festgezogen. Da die Kraftübertragung nicht über die Klinke 30, sondern über den Zwischenring erfolgt, ist der Verschleiß an der Klinke gesenkt.

Die Klinke 30 kann dabei in Schließrichtung 38 über die Rasten 34 gleiten. Die Relativbewegung zwischen Zwischenring 28 und Futterkörper 22 ist damit nur in Öffnungsrichtung 46 verhindert.

Die Rastausnehmung 48 im Zwischenring 28 ist dabei wiederum so ausgebildet, dass das Kopplungsglied 32 federnd gehalten wird. Dies bewirkt, dass ein geringes Moment in Öffnungsrichtung 46, wie es z. B. bei gebremsten Maschinen oder beim Verhaken des Bohrers ungewollt auftreten kann, keine Drehung der Betätigungshülse 12 in Öffnungsrichtung 46 bewirkt.

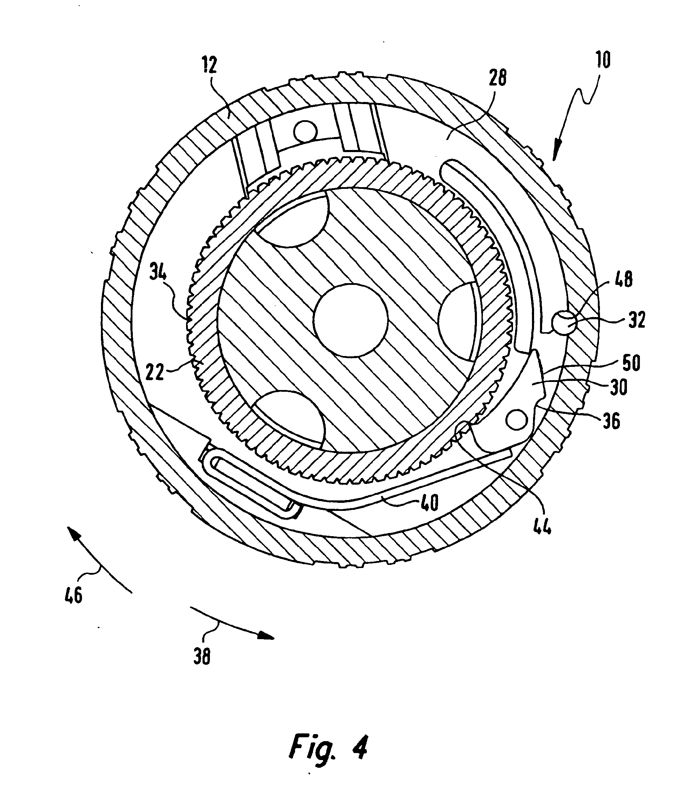

Figur 4 zeigt nun den geschlossenen Zustand des Bohrfutters 10, bei dem das Kopplungsglied 32 in der Rastausnehmung 48 des Zwischenrings 28 federnd gelagert ist. Die Nase 44 der Klinke 30 befindet sich dabei in Eingriff mit den Rasten 34 des Futterkörpers 22, da die Klinke 30 durch die Kraft der Feder 40 in die Rasten gedrückt wird.

Wie vorstehend bereits ausgeführt, kann in diesem Zustand durch weitere Drehung der Betätigungshülse in Schließrichtung 38 ein Nachspannen des Spannfutters 10 erfolgen, so dass die Spannbacken 20 noch fester an einem nicht dargestellten Werkzeugschaft in Anlage gebracht werden.

Zum Öffnen des Bohrfutters 10 wird die Betätigungshülse 12 in Öffnungsrichtung 46 gedreht, wobei hierbei zunächst der Rastwiderstand der Rastausnehmung 48 überwunden wird und das Kopplungsglied 32 die Rastausnehmung 48 verlässt. Es erfolgt dann zunächst eine Relativbewegung zwischen der Betätigungshülse 12 und dem Zwischenring 28 (d. h. die Betätigungshülse 12 wird gedreht, wobei der Zwischenring 28 steht) bis wiederum die erste Endlage des Kopplungsgliedes 32 erreicht ist, in der das Kopplungsglied 32 in der Rastausnehmung 36 der Klinke 30 gelagert ist. Hierzu wird das Kopplungsglied 42 gegen die Klinke 30 gedrückt, und bewirkt über die Schräge 50, die als Anlaufschräge der Klinke 30 dient, dass die Klinke 30 von den Rasten 34 gegen die Kraft der Feder 40, die hierbei überwunden wird, abgehoben wird, gegen die Kraft der Feder 40, die hierbei überwunden wird. Das Kopplungsglied 32 wird dann wiederum in der Rastausnehmung 36 federnd gehalten. Die federnde Halterung bewirkt, dass bei Drehen der Betätigungshülse 12 in Öffnungs- und Schließrichtung 38, 46 ohne den Widerstand durch an einem Bohrerschaft anliegende Spannbacken 20 das Kopplungsglied 32 nicht von der einen Rastausnehmung 36 zur anderen Rastausnehmung 48 bewegt wird. Der Benutzer hat somit nicht ständig den Eindruck, dass das Bohrfutter "Spiel" hat.

In der ersten Endlage, in der sich das Kopplungsglied 32 in der Rastausnehmung 36 befindet, liegt der Stift gleichzeitig an einer nicht dargestellten Anlagefläche des Zwischenrings 28 an, so dass das Drehmoment zum Lösen der Spannbacken 20 nicht über die Klinke 30, sondern unmittelbar über den Zwischenring 28 übertragen wird. Auf diese Weise kann der Verschleiß deutlich verringert werden.

Ein derartiges Bohrfutter 10 besitzt insbesondere den Vorteil, dass ein Nachspannen des Bohrers nach Erreichen der Spannlage ohne eine separate Nachspanneinrichtung möglich ist. Das Nachspannen erfolgt vielmehr durch die gleiche Bewegung wie das Schließen des Bohrfutters 10.

Es kann auf diese Weise eine hohe Haltekraft gleichzeitig mit einer automatischen Aktivierung und Deaktivierung der Sperreinrichtung bei gleichzeitig dauerhaft möglichst geringem Verschleiß sichergestellt werden. Darüber hinaus ist die Drehmomentübertragung von der Betätigungshülse 12 auf den Gewindering 24 konstruktiv einfach.

## Patentansprüche

1. Spannfutter zum schlüssellosen Einspannen von Werkzeugen in Elektrohandwerkzeuge, insbesondere Bohrer, Meißel, Schrauber, Bohrhämmer, mit einem Futterkörper (22), einer Betätigungshülse (12), die den Futterkörper (22) zumindest abschnittsweise koaxial umschließt und die relativ zum Futterkörper (22) verdrehbar ist sowie Spannbacken (20), die in Schrägführungen geführt sind und durch eine Drehung der Betätigungshülse (12) in axialer und gleichzeitig radialer Richtung relativ zum Futterkörper (22) bewegbar sind und eine Sperreinrichtung (26), die ein ungewolltes Öffnen des Spannfutters (10) verhindert, bei dem die Sperreinrichtung (26) einen Zwischenring (28) umfasst, der zum Öffnen und Schließen der Spannbacken (20) mit diesen zusammenwirkt und der relativ zum Futterkörper (22) verdrehbar ist, wobei die Relativbewegung in der Spannlage, bei der die Spannbacken gegeneinander oder gegen ein eingespanntes Werkzeug anliegen, in Öffnungsrichtung (40) der Spannbacken (20) blockiert ist und lediglich eine Relativbewegung in Schließrichtung (38) möglich ist und eine Klinke (30), die auf dem Zwischenring (28) drehbar gelagert ist und in der Spannlage in korrespondierende Rasten (34), die drehfest zum Futterkörper (22) sind, eingreift, wobei die Betätigungshülse (12) relativ zum Zwischenring (28) verdrehbar ist und die Verdrehbewegung durch ein Kopplungsglied (32), das mit der Betätigungshülse (12) verbunden ist, begrenzt ist und welches in zwei Endlagen die Betätigungshülse (12) und den Zwischenring (28) miteinander koppelt und im gekoppelten Zustand die Drehung der Betätigungshülse (12) auf den Zwischenring (28) überträgt, **dadurch gekennzeichnet, dass** das Kopplungsglied (32) in einer ersten Endlage in einer Rasttasche (36) der Klinke (30) federnd gehalten ist und der Zwischenring (28) mit einem Gewindering (24) drehfest verbunden ist und der Gewindering (24) mit den Spannbacken (20) zusammenwirkt zum Öffnen und Schließen derselben.

2. Spannfutter nach Anspruch 1, **dadurch gekennzeichnet, dass** die Klinke (30) mit einer Feder (40) zusammenwirkt, die in der Spannlage die Klinke (30) gegen die Rasten (34) drückt.

3. Spannfutter nach Anspruch 2, **dadurch gekennzeichnet, dass** die Feder (40) mit dem Zwischenring (28) verbunden ist.

4. Spannfutter nach einem der Ansprüche 1 bis 3, **dadurch gekennzeichnet, dass** eine erste Endlage der Relativbewegung zwischen Zwischenring (28) und Betätigungshülse (12) bei geöffnetem Spannfutter (10) vorliegt, bis die Spannbacken (20) gegeneinander oder gegen einen Werkzeugschaft anliegen.

5. Spannfutter nach Anspruch 4, **dadurch gekennzeichnet, dass** das Kopplungsglied (32) in der ersten Endlage der Relativbewegung des Zwischenrings und der Betätigungshülse (12) mit der Klinke (30) zusammenwirkt und diese gegen die Federkraft der Feder (40) von den Rasten (34) abhebt.

6. Spannfutter nach einem der vorangehenden Ansprüche, **dadurch gekennzeichnet, dass** in der Spannlage, in der die Spannbacken (20) gegen einen Werkzeugschaft oder gegen einander anliegen, das Kopplungsglied (32) die Klinke (30) freigibt und die Betätigungshülse (12) relativ zum Zwischenring (28) bis zum Erreichen einer zweiten Endlage verdrehbar ist.

7. Spannfutter nach Anspruch 6, **dadurch gekennzeichnet, dass** in der zweiten Endlage die Betätigungshülse (12) mit dem Zwischenring (28) gemeinsam drehbar ist zum Nachspannen des Spannfutters (10) in der Spannlage, wobei beim Nachspannen die Klinke (30) über die Rasten (34) in Schließrichtung (38) gleitet und die Bewegung in Öffnungsrichtung (46) gesperrt ist.

8. Spannfutter nach einem der vorangehenden Ansprüche, **dadurch gekennzeichnet, dass** das Kopplungsglied (32) in der zweiten Endlage federnd in einer Rastausnehmung (48) des Zwischenrings (28) gehalten ist.

9. Spannfutter nach einem der vorangehenden Ansprüche, **dadurch gekennzeichnet, dass** die Rasten (34) im Futterkörper (22) ausgebildet sind.

10. Spannfutter nach einem der vorangehenden Ansprüche, **dadurch gekennzeichnet, dass** das Kopplungsglied (32) als Stift ausgebildet ist, insbesondere als Metallstift, der in axialer Richtung des Spannfutters angeordnet ist.

11. Spannfutter nach Anspruch 10, **dadurch gekennzeichnet, dass** der Stift in die aus Kunststoff bestehende Betätigungshülse (12) eingespritzt oder eingesteckt ist.

12. Spannfutter nach einem der vorangehenden Ansprüche, **dadurch gekennzeichnet, dass** in der ersten Endlage das Kopplungsglied (32) neben der Klinke (30) auch mit dem Zwischenring (28) zusammenwirkt, zur Übertragung des Drehmoments zum Öffnen und Schließen der Spannbacken (20) von der Betätigungshülse (12) auf den Zwischenring (28).

13. Spannfutter nach einem der vorangehenden Ansprüche, **dadurch gekennzeichnet, dass** das Spannfutter (10) zweihülsig ausgebildet ist und neben der Betätigungshülse (12) eine hintere Hülse (14) vorgesehen ist, die am maschinenseitigen Ende (18) des Spannfutters (10) angeordnet ist und die den Futterkörper (22) koaxial umschließt, wobei die Betätigungshülse (12) am werkzeugseitigen Ende (18) des Spannfutters (10) angeordnet ist.

14. Spannfutter nach Anspruch 13, **dadurch gekennzeichnet**, das die Betätigungshülse (12) die hintere Hülse zumindest abschnittsweise umschließt oder umgekehrt.

15. Spannfutter nach einem der vorangehenden Ansprüche, **dadurch gekennzeichnet, dass** die Sperreinrichtung (26) am maschinenseitigen Ende (16) des Spannfutters (10) vorgesehen ist.

## Claims

1. Keyless chuck for clamping tools in electric hand tools, in particular drills, chisels, screwdrivers and hammer drills, with a chuck body (22), an actuator sleeve (12) which encloses coaxially at least portions of the chuck body (22) and may be rotated relative to the chuck body (22), and clamping jaws (20) which are guided in oblique guides and may be moved relative to the chuck body (22) by rotating the actuator sleeve (12) in a simultaneously axial and radial direction, and a blocking device (26) preventing an undesired opening of the chuck (10), wherein the blocking device (26) comprises an intermediate ring (28) which cooperates with the clamping jaws (20) to open and close said jaws and which may be rotated relative to the chuck body (22), the relative movement in the clamping position, in which the clamping jaws rest against each other or against a clamped tool, being blocked in the opening direction (40) of the clamping jaws (20) and only one relative movement being possible in the closure direction (38) and a pawl (30), which is rotatably mounted on the intermediate ring (28), engaging in corresponding notches (34) which are non-rotatable with respect to the chuck body (22), in the clamping position, the actuator sleeve (12) being rotatable relative to the intermediate ring (28) and the rotational movement being delimited by a coupling element (32) which is connected to the actuator sleeve (12) and links together the actuator sleeve (12) and the intermediate ring (28) in two end positions and, in the linked state, transfers the rotation of the actuator sleeve (12) to the intermediate ring (28), **characterised in that** in a first end position, the coupling element (32) is held resiliently in a latching recess (36) in the pawl (30) and the intermediate ring (28) is rotationally engaged with a threaded ring (24) which cooperates with the clamping jaws (20) to open and close said jaws.

2. Chuck according to claim 1, **characterised in that** the pawl (30) cooperates with a spring (40) which, in the clamping position, presses the pawl (30) against the notches (34).

3. Chuck according to claim 2, **characterised in that** the spring (40) is connected to the intermediate ring (28).

4. Chuck according to any one of claims 1 to 3, **characterised in that** a first end position of the relative movement between intermediate ring (28) and actuator sleeve (12) prevails when the chuck (10) is open until the clamping jaws (20) rest against one another or against the shank of a tool.

5. Chuck according to claim 4, **characterised in that** the coupling element (32) cooperates with the pawl (30) in the first end position of the relative movement between the intermediate ring and the actuator sleeve (12) and lifts the pawl from the notches (34) against the spring force of the spring (40).

6. Chuck according to any one of the preceding claims, **characterised in that** in the clamping position in which the clamping jaws (20) rest against the shank of a tool or against one another, the coupling element (32) releases the pawl (30) and the actuator sleeve (12) may be rotated relative to the intermediate ring (28) until a second end position is attained.

7. Chuck according to claim 6, **characterised in that** in the second end position, the actuator sleeve (12) may be rotated together with the intermediate ring (28) for re-clamping the chuck (10) in the clamping position, the pawl (30) sliding over the notches (34) in the closure direction (38) during the re-clamping action and the movement is blocked in the opening direction (46).

8. Chuck according to any one of the preceding claims, **characterised in that** the coupling element (32) is held resiliently in a latching recess (48) in the intermediate ring (28) in the second end position.

9. Chuck according to any one of the preceding claims, **characterised in that** the notches (34) are formed in the chuck body (22).

10. Chuck according to any one of the preceding claims, **characterised in that** the coupling element (32) is configured as a pin, in particular a metal pin, positioned in the axial direction of the chuck.

11. Chuck according to claim 10, **characterised in that** the pin is injected or inserted into the actuator sleeve (12) which is made of plastics material.

12. Chuck according to any one of the preceding claims, **characterised in that** in the first end position, the coupling element (32) also cooperates with the intermediate ring (28), in addition to the pawl (30), for transferring the torque for opening and closing the clamping jaws (20) from the actuator sleeve (12) to the intermediate ring (28).

13. Chuck according to any one of the preceding claims, **characterised in that** the chuck (10) is configured with two sleeves and, in addition to the actuator sleeve (12), a rear sleeve (14) is provided which is positioned on the machine-side end (18) of the chuck (10) and coaxially encloses the chuck body (22), the actuator sleeve (12) being positioned on the tool-side end (18) of the chuck (10).

14. Chuck according to claim 13, **characterised in that** the actuator sleeve (12) encloses at least portions of the rear sleeve or vice versa.

15. Chuck according to any one of the preceding claims, **characterised in that** the locking device (26) is provided on the machine-side end (16) of the chuck (10).

## Revendications

1. Mandrin de serrage pour le serrage sans clé d'outils dans des outils portatifs électriques, en particulier des perceuses, trépans, tournevis, marteaux perforateurs, comportant un corps de mandrin (22), une douille d'actionnement (12), qui entoure coaxialement, au moins en partie, le corps de mandrin (22) et qui est apte à tourner par rapport au corps de mandrin (22), ainsi que des mâchoires de serrage (20), qui sont guidées dans des glissières obliques et qui, moyennant une rotation de la douille d'actionnement (12), peuvent être déplacées par rapport au corps de mandrin (22) dans la direction axiale et, simultanément, dans la direction radiale, et un dispositif de verrouillage (26) qui empêche une ouverture intempestive du mandrin de serrage (10), dans lequel le dispositif de verrouillage (26) comporte une bague intermédiaire (28) qui, pour l'ouverture et la fermeture des mâchoires de serrage (20), coopère avec celles-ci et qui est apte à tourner par rapport au corps de mandrin (22), sachant que, dans la position de serrage, dans laquelle les mâchoires de serrage sont en appui l'une contre l'autre ou contre un outil mis en place, le mouvement relatif est bloqué dans la direction d'ouverture (40) des mâchoires de serrage (20) et seulement un mouvement relatif dans la direction de fermeture (38) est possible, et un loquet (30), qui est monté rotatif sur la bague intermédiaire (28) et qui, dans la position de serrage, s'engage dans des crans d'arrêt (34) correspondants qui sont immobiles en rotation par rapport au corps de mandrin (22), la douille d'actionnement (12) étant rotative par rapport à la bague intermédiaire (28) et le mouvement de rotation étant limité par un organe de couplage (32) relié à la douille d'actionnement (12), par lequel, dans deux positions finales, la douille d'actionnement (12) et la bague intermédiaire (28) sont couplées l'une à l'autre et par lequel, dans la position couplée, la rotation de la douille d'actionnement (12) est transmise sur la bague intermédiaire (28), **caractérisé en ce que** l'organe de couplage (32), dans une première position finale, est maintenu de manière flexible dans une poche de blocage (36) du loquet (30), et la bague intermédiaire (28) est reliée solidaire en rotation avec une bague filetée (24), et ladite bague filetée (24) coopère avec les mâchoires de serrage (20) en vue de l'ouverture et de la fermeture de celles-ci.

2. Mandrin de serrage selon la revendication 1, **caractérisé en ce que** le loquet (30) coopère avec un ressort (40) qui, dans la position de serrage, pousse le loquet (30) contre les crans d'arrêt (34).

3. Mandrin de serrage selon la revendication 2, **caractérisé en ce que** le ressort (40) est relié à la bague intermédiaire (28).

4. Mandrin de serrage selon l'une quelconque des revendications 1 à 3, **caractérisé en ce qu'**une première position finale du mouvement relatif entre la bague intermédiaire (28) et la douille d'actionnement (12) existe en présence du mandrin de serrage (10) ouvert, jusqu'à ce que les mâchoires de serrage (20) soient en appui l'une contre l'autre ou contre une tige d'outil.

5. Mandrin de serrage selon la revendication 4, **caractérisé en ce que**, dans la première position finale du mouvement relatif de la bague intermédiaire (28) et de la douille d'actionnement (12), l'organe de couplage (32) coopère avec le loquet (30) et détache celui-ci des crans d'arrêt (34) à l'encontre de la force du ressort (40).

6. Mandrin de serrage selon l'une quelconque des revendications précédentes, **caractérisé en ce que**, dans la position de serrage, dans laquelle les mâchoires de serrage (20) sont en appui contre une tige d'outil ou l'une contre l'autre, l'organe de couplage (32) libère le loquet (30) et la douille d'actionnement (12) peut tourner par rapport à la bague intermédiaire (28) jusqu'à ce qu'elle atteigne une deuxième position finale.

7. Mandrin de serrage selon la revendication 6, **caractérisé en ce que**, dans la deuxième position finale, la douille d'actionnement (12) peut tourner conjointement avec la bague intermédiaire (28) en vue de resserrer le mandrin de serrage (10) dans la position de serrage, sachant que, lors du resserrage, le loquet (30) glisse sur les crans d'arrêt (34) dans la direction de fermeture (38) et le mouvement dans la direction d'ouverture (46) est bloqué.

8. Mandrin de serrage selon l'une quelconque des revendications précédentes, **caractérisé en ce que**, dans la deuxième position finale, l'organe de couplage (32) est maintenu de manière flexible dans un évidement d'arrêt (48) de la bague intermédiaire (28).

9. Mandrin de serrage selon l'une quelconque des revendications précédentes, **caractérisé en ce que** les crans d'arrêt (34) sont réalisés dans le corps de mandrin (22).

10. Mandrin de serrage selon l'une quelconque des revendications précédentes, **caractérisé en ce que** l'organe de couplage (32) est réalisé sous forme de tenon, en particulier sous forme de tenon métallique, qui est disposé dans la direction axiale du mandrin de serrage.

11. Mandrin de serrage selon la revendication 10, **caractérisé en ce que** le tenon est moulé par injection ou enfiché dans la douille d'actionnement (12) réalisée en matière plastique.

12. Mandrin de serrage selon l'une quelconque des revendications précédentes, **caractérisé en ce que**, dans la première position finale, l'organe de couplage (32) coopère, en plus du loquet (30), également avec la bague intermédiaire (28) afin que le couple de rotation pour l'ouverture et la fermeture des mâchoires de serrage (20) soit transmis par la douille d'actionnement (12) sur la bague intermédiaire (28).

13. Mandrin de serrage selon l'une quelconque des revendications précédentes, **caractérisé en ce que** le mandrin de serrage (10) est réalisé sous forme de deux douilles et, outre la douille d'actionnement (12), il est prévu une douille arrière (14) qui est disposée sur l'extrémité (16) du côté machine du mandrin de serrage (10) et qui entoure coaxialement le corps de mandrin (22), la douille d'actionnement (12) étant disposée sur l'extrémité (18) du côté outil du mandrin de serrage (10).

14. Mandrin de serrage selon la revendication 13, **caractérisé en ce que** la douille d'actionnement (12) entoure au moins par zones la douille arrière ou inversement.

15. Mandrin de serrage selon l'une quelconque des revendications précédentes, **caractérisé en ce que** le dispositif de verrouillage (26) est prévu sur l'extrémité (16) du côté machine du mandrin de serrage (10).
